# DEMANDE DE BREVET EUROPEEN

(11) **EP 1 569 462 A1**
(43) Date de publication de la demande: **31.08.2005**
(21) Numéro de dépôt: 04300081.9
(22) Date de dépôt: 13.02.2004
(51) Int. Cl.: H04N 7/34, H04N 7/26

(54) **Procédé de recherche de la direction de prédiction en codage vidéo intra-image**

(71) Demandeur: FRANCE TELECOM, 75015 Paris (FR)
(72) Inventeur: Loras, Frédéric, 75015 Paris (FR); Amiel, Jean-Christophe, 75018 Paris (FR)
(74) Mandataire: Grynwald, Albert

(57) **Abrégé**

Selon l'invention, ledit procédé comprend les étapes suivantes :
- choix de deux directions (E, S) de prédiction,
- calcul des blocs virtuels associés auxdites directions initiales (E, S),
- comparaison desdits blocs virtuels avec le bloc courant et choix de la direction initiale (E) de prédiction, dite première direction principale,
- calcul des blocs virtuels associés aux directions (ENE, ESE) de prédiction immédiatement voisines de ladite première direction principale (E),
- comparaison desdits blocs virtuels avec le bloc courant, et détermination de la meilleure direction de prédiction,
- si la meilleure direction de prédiction est la première direction principale (E) ou une (ENE) des directions immédiatement voisines située à une extrémité des directions de prédiction, cette meilleure direction est la direction de prédiction recherchée, sinon,
- calcul du bloc virtuel associé à la direction (SE) de prédiction immédiatement voisine de la seconde direction principale (ESE), différente de la première direction principale (E),
- comparaison desdits blocs virtuels avec le bloc courant, et détermination de la meilleure direction de prédiction,
- si ladite meilleure direction de prédiction est ladite seconde direction principale (ESE) ou la direction immédiatement voisine (SE) située à une extrémité des directions de prédiction, cette meilleure direction est la direction de prédiction recherchée, sinon,
- poursuite par itération du procédé jusqu'à la détermination de la direction de prédiction recherchée.

Application au codage vidéo.

## Description

La présente invention concerne un procédé de recherche de la direction de prédiction en codage vidéo intra-image.

L'invention trouve une application particulièrement avantageuse dans le domaine du codage vidéo intra-image comme décrit dans la norme H.264/MPEG-4 AVC.

D'une manière générale, le codage vidéo d'une image consiste à effectuer sur cette image des opérations dites de compression qui ont pour but de réduire la quantité d'informations à transmettre et donc de faciliter la transmission de l'image à travers les réseaux de télécommunication, tout en essayant d'obtenir la meilleure qualité possible pour l'image finale restituée.

Il existe un mode de codage dit inter-image, ou « codage inter », qui consiste, en substance, à effectuer une différence entre l'image courante et une image prédite à partir des images précédentes. Dans ce cas, seule cette différence est transmise, aboutissant ainsi à une compression élevée puisque la quantité d'informations à transmettre se trouve considérablement réduite.

On connaît un autre mode de codage dit intra-image, ou « codage intra », dans lequel l'image vidéo est codée par rapport à elle-même, sans référence ni comparaison à d'autres images, notamment les images précédentes.

Le codage intra est nécessaire dans une communication vidéo pour des initialisations, comme pour des synchronisations. Il a la particularité de limiter les dépendances d'un bloc d'image aux seuls blocs voisins. Ce mode de codage a l'avantage d'être robuste. Cependant, il présente l'inconvénient de moins bien compresser l'image.

Dans les normes de codage récentes, comme la norme H.264 de l'UIT-T, également connue sous le nom de MPEG-4 AVC à l'ISO/IEC, le codage des blocs intra se fait par prédiction par rapport aux éléments d'image (pixels) voisins. La prédiction d'un bloc conduit à la construction d'un bloc virtuel pour le bloc courant, ce qui permet par comparaison entre bloc virtuel et bloc courant de déterminer la différence entre ces blocs et de transmettre dans le réseau cette différence accompagnée d'informations additionnelles permettant de reconstituer le bloc à partir de ladite différence. A la réception, l'image vidéo est reconstituée en appliquant, par des traitements appropriés, la différence transmise au bloc virtuel reconstruit au moyen desdites informations additionnelles. De cette manière, on retrouve en codage intra les avantages du codage inter d'une meilleure compression.

Pour améliorer ce type de codage intra, il a été défini des directions de prédiction qui permettent d'interpoler les pixels d'un bloc voisin pour prédire le bloc courant, à savoir construire un bloc virtuel associé à chaque direction de prédiction dont la meilleure comparaison au bloc courant déterminera la différence qui sera transmise dans le réseau. En d'autres termes, chaque direction de prédiction conduit à un traitement algorithmique différent conduisant à un bloc virtuel différent. Il y a donc autant de blocs virtuels pour le même bloc courant qu'il y a de directions de prédiction. Bien entendu, la direction de prédiction choisie est celle qui minimise la quantité d'informations à transmettre tout en gardant la meilleure qualité possible, c'est-à-dire, en d'autres termes, celle qui réalise le meilleur compromis qualité/compression.

Pour permettre à l'encodeur de décider de la meilleure direction de prédiction, une méthode classique consiste à calculer systématiquement tous les blocs virtuels pour toutes les directions de prédictions possibles, puis, par comparaison de tous ces blocs virtuels avec le bloc courant, à déterminer la direction qui donne la plus petite différence entre le bloc virtuel associé et le bloc courant.

Cependant, il s'avère que le calcul de toutes les interpolations nécessaires pour calculer l'ensemble des blocs virtuels est très coûteux en temps de calcul à cause de la complexité engendrée par cette méthode.

Aussi, le problème technique à résoudre par l'objet de la présente invention est de proposer un procédé de recherche de la direction de prédiction d'un bloc courant d'image en codage vidéo intra-image, comprenant des étapes de calcul, dans des directions de prédiction données, de blocs virtuels associés audit bloc courant, procédé qui permettrait de réduire le temps de calcul nécessité par la recherche de la meilleure direction de prédiction, c'est à dire celle conduisant au bloc virtuel le plus proche du bloc courant.

La solution au problème technique posé consiste, selon la présente invention, en ce que ledit procédé comprend les étapes suivantes :
- choix de deux directions de prédiction, dites directions initiales, parmi les directions de prédiction données,
- calcul des blocs virtuels associés auxdites directions initiales de prédiction,
- comparaison desdits blocs virtuels avec le bloc courant et choix de la direction initiale de prédiction, dite première direction principale, qui minimise la différence entre le bloc virtuel associé et le bloc courant,
- calcul des blocs virtuels associés aux directions de prédiction immédiatement voisines de ladite première direction principale,
- comparaison des blocs virtuels associés à la première direction principale et auxdites directions immédiatement voisines avec le bloc courant, et détermination de la meilleure direction de prédiction qui minimise la différence entre le bloc virtuel associé et le bloc courant,
- si ladite meilleure direction de prédiction est ladite première direction principale ou une des directions immédiatement voisines si elle est située à une extrémité de l'ensemble des directions de prédiction, cette meilleure direction est la direction de prédiction recherchée, sinon,
- choix de la direction de prédiction, dite seconde direction principale, qui minimise la différence entre le bloc virtuel associé et le bloc courant,
- calcul du bloc virtuel associé à la direction de prédiction immédiatement voisine de la seconde direction principale, différente de la première direction principale,
- comparaison des blocs virtuels associés à la seconde direction principale de prédiction et ladite direction immédiatement voisine avec le bloc courant, et détermination de la meilleure direction de prédiction qui minimise la différence entre le bloc virtuel associé et le bloc courant,
- si ladite meilleure direction de prédiction est ladite seconde direction principale ou la direction immédiatement voisine si elle est située à une extrémité de l'ensemble des directions de prédiction, cette meilleure direction est la direction de prédiction recherchée, sinon,
- poursuite par itération du procédé jusqu'à la détermination de la direction de prédiction recherchée.

Ainsi, comme on le verra en détail plus loin, le procédé conforme à l'invention permet d'aboutir à la meilleure direction de prédiction sans avoir à calculer tous les blocs virtuels associés à toutes les directions de prédiction, mais en minimisant le nombre de directions testées par une méthode d'itération. Il s'ensuit clairement une réduction du temps de calcul correspondant.

Selon un mode de réalisation particulier de l'invention, ladite itération est arrêtée si la meilleure direction de prédiction courante est une direction voisine d'une direction immédiatement voisine de la direction initiale non retenue comme première direction principale. Cette disposition présente l'avantage de limiter encore le nombre de directions de prédiction testées et donc de concourir à la diminution du temps de calcul recherchée.

Enfin, l'invention prévoit également que lesdites directions initiales de prédiction sont les directions dites verticale et horizontale définies dans la norme H.264/MPEG-4 AVC. Ces directions sont en effet celles dont les interpolations sont les plus simples à calculer par rapport aux autres directions diagonales.

La description qui va suivre en regard des dessins annexés, donnés à titre d'exemples non limitatifs, fera bien comprendre en quoi consiste l'invention et comment elle peut être réalisée.

La figure 1 est un diagramme des directions de prédiction retenues pour le codage intra dans la norme H.264/MPEG-4 AVC.

La figure 2 est le diagramme de la figure 1 sur lequel sont indiquées les directions initiales de prédiction mises en oeuvre dans le procédé selon l'invention.

La figure 3 est le diagramme des figures 1 et 2 sur lequel est précisée la nomenclature utilisée pour désigner les différentes directions de prédiction.

La figure 4 est un organigramme du procédé conforme à l'invention.

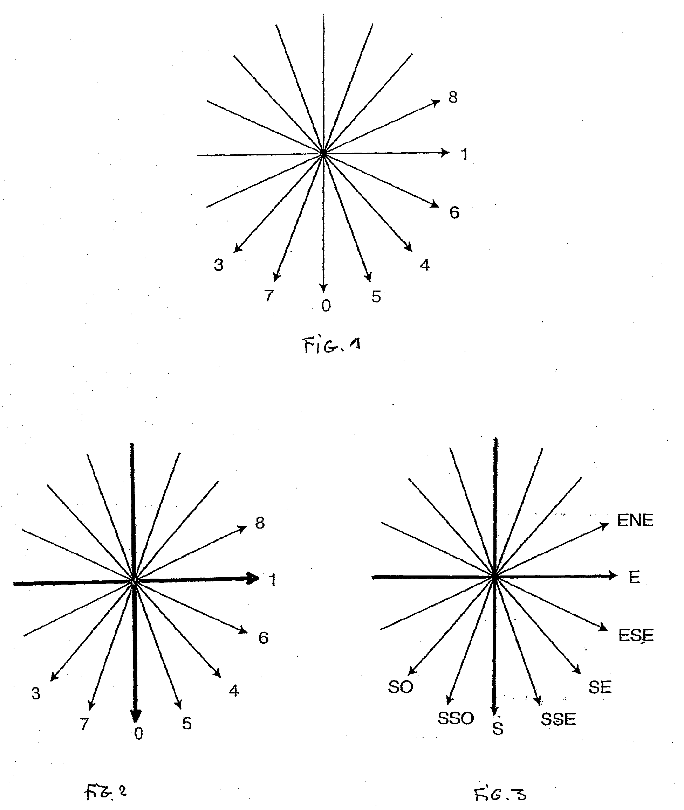

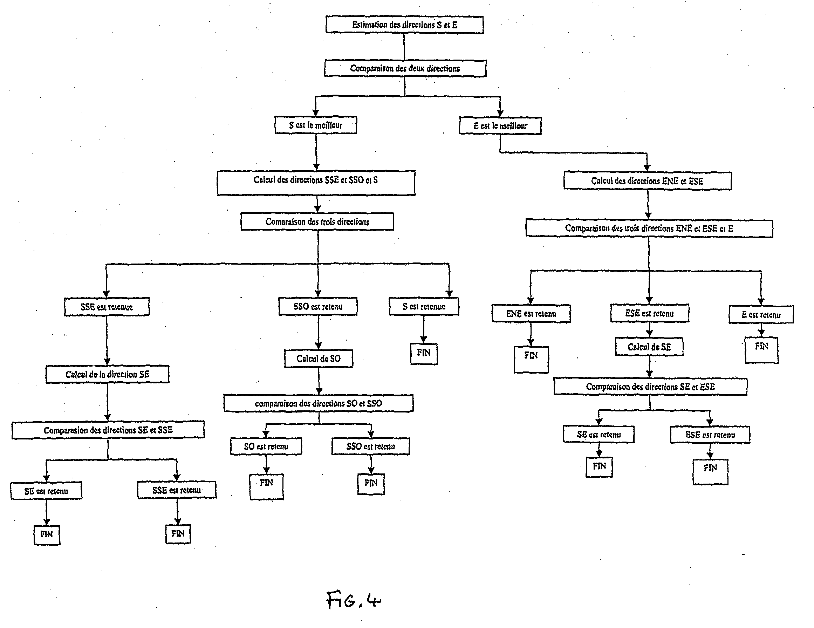

Sur la figure 1, on a représenté les huit directions de prédiction prévues par la norme H.264/MPEG-4 AVC pour effectuer le calcul des huit blocs virtuels d'un bloc courant parmi lesquels le bloc virtuel présentant la moindre différence avec le bloc courant déterminera la meilleure direction de prédiction, c'est-à-dire celle qui sera effectivement utilisée pour le codage intra de l'image.

Le calcul de comparaison de la meilleure direction de prédiction peut être effectué de différentes manières. On pourra par exemple utiliser des calculs du type somme des différences des valeurs absolues entre les pixels en cours de codage et leur prédiction. Il sera alors possible de comparer les sommes obtenues pour chaque direction et ne garder que la somme la plus faible.

La figure 3 donne la correspondance entre les directions de prédiction de la figure 1 et la nomenclature de ces directions qui sera utilisée dans la suite de ce mémoire.

La première étape du procédé, objet de l'invention, consiste dans un premier temps à choisir deux directions de prédiction de départ, que l'on appellera directions initiales, parmi les huit directions existantes.

Comme l'indique la figure 2, il y a avantage à choisir les directions dites verticale et horizontale , à savoir les directions « 0 » et « 1 » de la figure 1 ou S et E de la figure 3. En effet, les interpolations pour ces deux directions particulières sont très simples à calculer par rapport aux autres directions. L'évaluation de ces directions ne demande la consultation dans la mémoire du système que d'un seul pixel dont la valeur est simplement recopiée dans le bloc virtuel. Pour les autres directions, les complexités sont bien plus élevées et dépendent de la diagonale. On pourra se référer à la norme H.264/MPEG-4 AVC pour évaluer ces différentes complexités en fonction des directions de prédiction.

Ainsi qu'on peut le voir sur l'organigramme de la figure 4, les blocs virtuels calculés dans les deux directions initiales S et E sont comparés au bloc courant de manière à définir la meilleure de ces deux directions en terme de différence entre le bloc virtuel associé et le bloc courant. On supposera que la direction initiale de prédiction E est la meilleure et donc celle retenue pour la suite du procédé. Elle est alors désignée par « première direction principale ».

On prend alors en compte les deux directions de prédiction immédiatement voisines de la première direction principale E, à savoir les directions ENE et ESE, pour lesquels on calcule les blocs virtuels associées.

Les blocs virtuels associés aux directions de prédiction E, ENE et ESE sont comparés au bloc courant et on détermine celle de ces trois directions qui donne la plus petite différence avec le bloc courant.

Si la première direction principale E est la meilleure, alors on considère que cette direction est la direction de prédiction recherchée pour le codage intra du bloc. La direction recherchée étant trouvée, il est mis fin au procédé.

Il en est de même si la direction ENE est la meilleure. Etant située à une extrémité de l'ensemble des huit directions de prédiction possibles, le processus d'itération ne peut se poursuivre. Le procédé est arrêté en prenant cette direction ENE comme direction de prédiction recherchée.

Dans le cas contraire, la direction la meilleure est ESE que l'on appelle alors « seconde direction principale ».

Le procédé se poursuit par la prise en compte de la direction immédiatement voisine de la seconde direction principale ESE, qui n'est pas la première direction principale E. Dans l'exemple choisi, il s'agit de la direction de prédiction SE. Le bloc virtuel associé à la direction SE est calculé et comparé à son tour au bloc courant.

Deux situations peuvent se produire : ou bien la seconde direction principale ESE est la meilleure et constitue ainsi la direction de prédiction recherchée, il est alors mis fin au procédé, ou bien la direction SE est la meilleure. Dans ce dernier cas, on peut continuer l'itération vers la direction SSE de la même façon en comparant les directions SE et SSE. Mais on peut également arrêter l'itération en considérant, comme cela est montré sur la figure 4, que la direction SE est la meilleure en faisant l'hypothèse que la direction SSE proche de la direction initiale S non retenue ne peut être meilleure que la direction SE. De cette manière, on gagne encore du temps de calcul à ne pas effectuer une opération qui a toute chance de se révéler inutile.

## Revendications

1. Procédé de recherche de la direction de prédiction d'un bloc courant d'image en codage vidéo intra-image, comprenant des étapes de calcul, dans des directions de prédiction données, de blocs virtuels associés audit bloc courant, **caractérisé en ce que** ledit procédé comprend les étapes suivantes :
- choix de deux directions (E, S) de prédiction, dites directions initiales, parmi les directions de prédiction données,
- calcul des blocs virtuels associés auxdites directions initiales (E, S) de prédiction,
- comparaison desdits blocs virtuels avec le bloc courant et choix de la direction initiale (E) de prédiction, dite première direction principale, qui minimise la différence entre le bloc virtuel associé et le bloc courant,
- calcul des blocs virtuels associés aux directions (ENE, ESE) de prédiction immédiatement voisines de ladite première direction principale (E),
- comparaison des blocs virtuels associés à la première direction principale (E) et auxdites directions immédiatement voisines (ENE, ESE) avec le bloc courant, et détermination de la meilleure direction de prédiction qui minimise la différence entre le bloc virtuel associé et le bloc courant,
- si ladite meilleure direction de prédiction est ladite première direction principale (E) ou une (ENE) des directions immédiatement voisines si elle est située à une extrémité de l'ensemble des directions de prédiction, cette meilleure direction est la direction de prédiction recherchée, sinon,
- choix de la direction (ESE) de prédiction, dite seconde direction principale, qui minimise la différence entre le bloc virtuel associé et le bloc courant,
- calcul du bloc virtuel associé à la direction (SE) de prédiction immédiatement voisine de la seconde direction principale (ESE), différente de la première direction principale (E),
- comparaison des blocs virtuels associés à la seconde direction principale (ESE) de prédiction et ladite direction immédiatement voisine (SE) avec le bloc courant, et détermination de la meilleure direction de prédiction qui minimise la différence entre le bloc virtuel associé et le bloc courant,
- si ladite meilleure direction de prédiction est ladite seconde direction principale (ESE) ou la direction immédiatement voisine (SE) si elle est située à une extrémité de l'ensemble des directions de prédiction, cette meilleure direction est la direction de prédiction recherchée, sinon,
- poursuite par itération du procédé jusqu'à la détermination de la direction de prédiction recherchée.

2. Procédé selon la revendication 1, **caractérisé en ce que** ladite itération est arrêtée si la meilleure direction de prédiction courante (SE) est une direction voisine d'une direction immédiatement voisine (SSE) de la direction initiale (S) non retenue comme première direction principale.

3. Procédé selon l'une des revendications 1 ou 2, **caractérisé en ce que** lesdites directions initiales de prédiction sont les directions dites verticale et horizontale définies dans la norme H.264/MPEG-4 AVC.
